# EUROPÄISCHE PATENTSCHRIFT

(11) **EP 1 069 368 B1**
(45) Veröffentlichungstag und Bekanntmachung des Hinweises auf die Patenterteilung: **03.10.2007**
(21) Anmeldenummer: 00114604.2
(22) Anmeldetag: 07.07.2000
(51) Int. Cl.: F16L 55/162, F16L 55/26

(54) **Abdichtungsvorrichtung und Verfahren zur Abdichtung von Rohren**
Sealing construction and method for the sealing of pipes
Dispositif d'étanchéité et procédé pour l'étanchéité de tuyaux

(30) Priorität: 16.07.1999 DE 19933315
(43) Veröffentlichungstag der Anmeldung: 17.01.2001
(73) Patentinhaber: EADS Deutschland GmbH, 81663 München (DE)
(72) Erfinder: Reichl, Johann, 85077 Manching (DE); Schweiger, Leonhard, 85077 Manching (DE)

(56) Entgegenhaltungen:
- WO-A-93/19321
- DE-A- 4 215 537
- DE-U- 9 202 199
- US-A- 3 834 421

## Beschreibung

Die Erfindung betrifft eine Abdichtungs-Vorrichtung zum Abdichten von undichten Rohrstellen, insbesondere solchen, die von außen schwer zugänglich sind sowie ein Verfahren zur Abdichtung von Rohren.

In Rohrsystemen können undichte Stellen in den verwendeten Rohren, und zwar insbesondere an Verbindungsstellen der Rohre auftreten. Bei komplexeren Rohrsystemen oder bei Anlagen, die solche Rohrsysteme aufweisen, ist es aus Kostengründen nach Möglichkeit zu vermeiden, Teile des Rohrsystems mit undichten Stellen aus dem Rohrsystem zu entfernen und auszuwechseln.

Beispielsweise verlaufen in Tankbereichen von Tragflügeln moderner Flugzeuge Kabelleitungen, die Leckage-Stellen aufweisen können. Im Falle einer Leckage wäre es zu aufwendig, undichte Leitungsstellen auszuwechseln, da hierfür der Flügel vom Flugzeug und die Beplankung vom Flügelgerippe abzumontieren wären.

Aus der DE 42 15 537 A1 ist eine Einrichtung zum Prüfen und Instandsetzen von Kanalisations- und vergleichbaren Rohrleitungen mit einem vorderen und einem hinteren Rohrverschluß bekannt, die dem Oberbegriff des Anspruchs 1 entspricht. Einem der beiden Rohrverschlüsse ist eine Injektionseinheit vor- oder nachgeschaltet. Eine aufblasbare Manschette ist vorgesehen, die im Raum zwischen den Rohrverschlüssen aufgeblasen wird, um die Dichtmasse in den Schaden zu pressen und ein Glätten der Innenwand der Rohrleitung zu bewirken. Ein Nachteil des Verfahrens ist, daß die Verteilung der Dichtmasse an der Rohr-Innenwand nicht kontrollierbar ist. Außerdem ist der Gegenstand der DE 42 15 537 A1 verhältnismäßig aufwendig gebaut.

Es ist die Aufgabe der Erfindung, eine Abdichtungs-Vorrichtung für Rohrleitungen zu schaffen, die mit einfachen Mitteln eine zuverlässige Abdichtung einer Leckage-Stelle ermöglicht, die nur von zwei entfernten Enden der Rohreiltung zugänglich ist.

Diese Aufgabe wird mit den Merkmalen des Patentanspruchs 1 gelöst. Weitere Ausführungsformen sind in den Unteransprüchen angegeben.

Ein Vorteil der Erfindung ist, daß sie mit einfachen Mitteln aus relativ kostengünstigen Kaufteilen zusammengesetzt werden kann. Ein weiterer Vorteil ist, daß die erfindungsgemäße Verdichtungs-Vorrichtung mit sehr geringem Arbeitsaufwand auf verschiedene Rohrdurchmesser angepaßt werden kann.

Ein weiterer Vorteil ist, daß die erfindungsgemäße Abdichtungs-Vorrichtung eine zuverlässige Abdichtung bewirkt, da sichergestellt ist, daß das Abdichtmaterial an der Rohrinnenwand der Leckage-Stelle gleichmäßig aufgebracht wird.

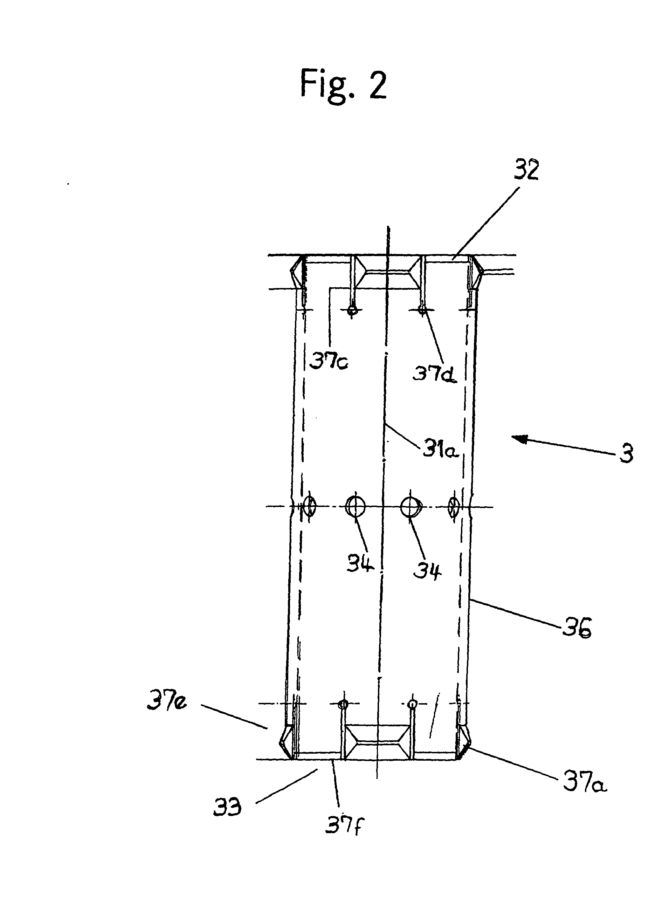

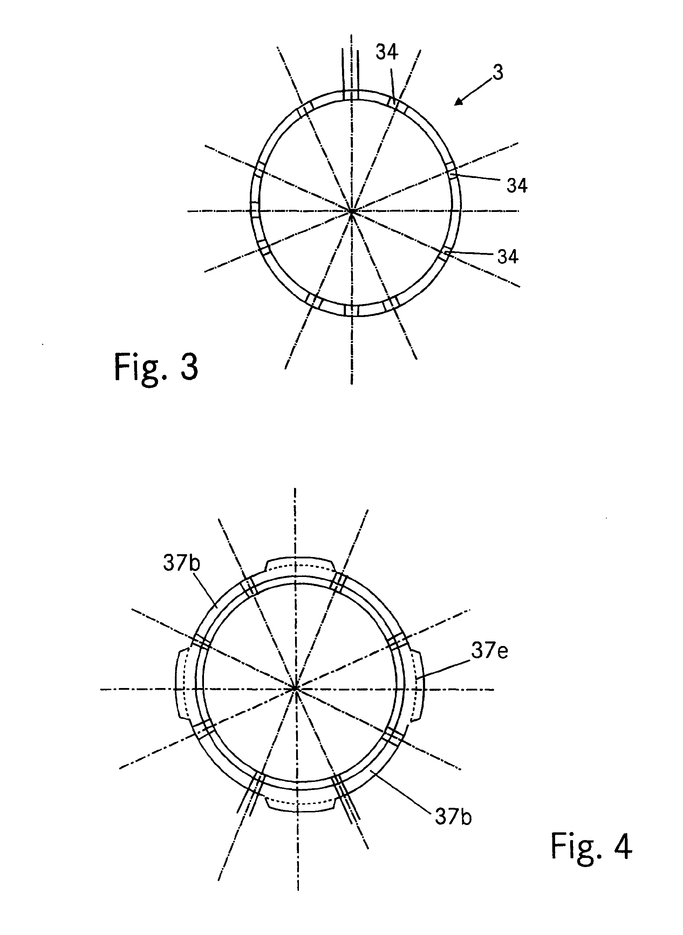

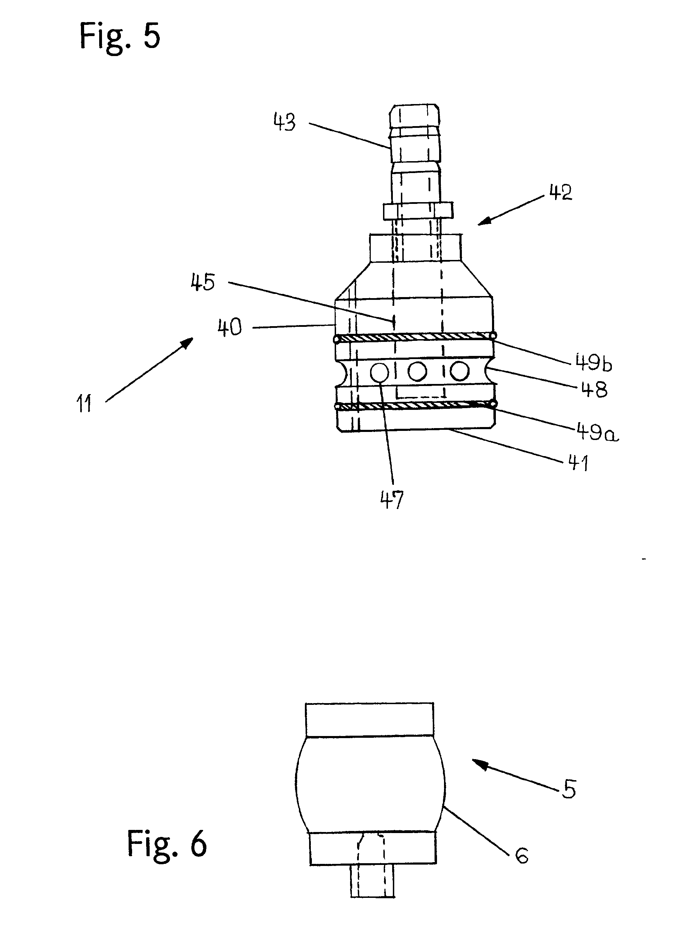

Im folgenden wird die Erfindung anhand der Fig. 1 bis 5 beschrieben, die zeigen:
- Fig. 1: eine Darstellung der gesamten erfindungsgemäßen Abdichtungs-Vorrichtung mit einer Bevorratungs-Einrichtung, einer unterbrochen dargestellten Schlauchverbindung, einer Injektions-Vorrichtung und einer zur Veranschaulichung neben dieser dargestellten Strukturhülse, in die die Injektions-Vorrichtung einschiebbar ist,
- Fig. 2: eine Seitenansicht der Stützhülse als Bestandteil der Abdichtungs-Vorrichtung nach der Fig. 1,
- Fig. 3: einen Querschnitt durch die Stützhülse entlang der Linie A-A der Fig. 2,
- Fig. 4: eine Frontansicht der Stützhülse nach der Fig. 2, und
- Fig. 5: eine Seitenansicht des Injektionskolbens als Bestandteil der erfindungsgemäßen Abdichtungs-Vorrichtung,
- Fig. 6: eine Seitenansicht einer Blasebalg-Vorrichtung, die mit der Injektions-Vorrichtung zusammenwirkt und

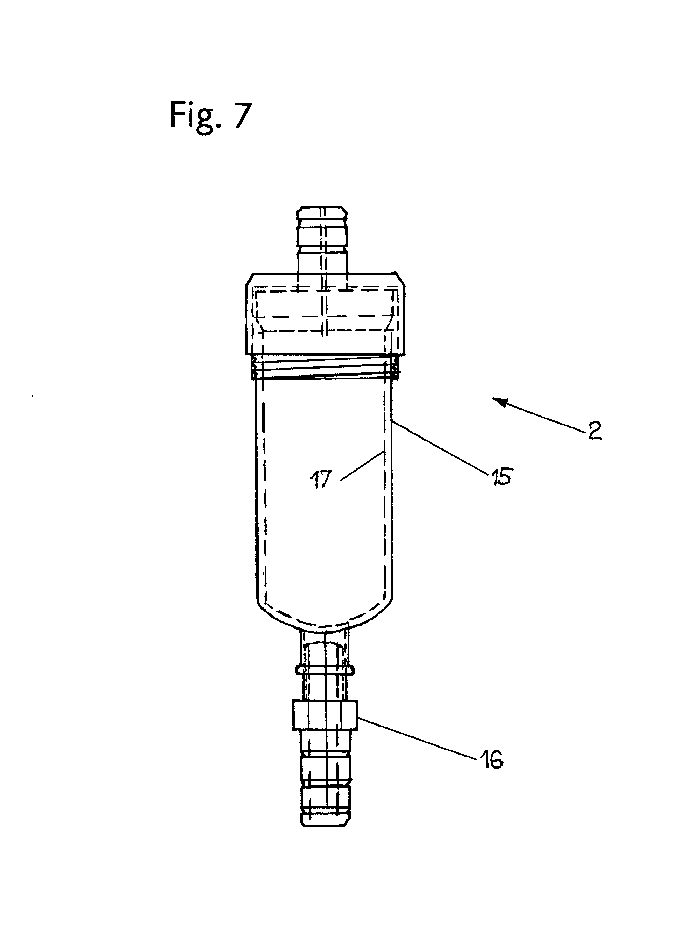

- Fig. 7: eine Seitenansicht für die Bevorratungs-Einrichtung.

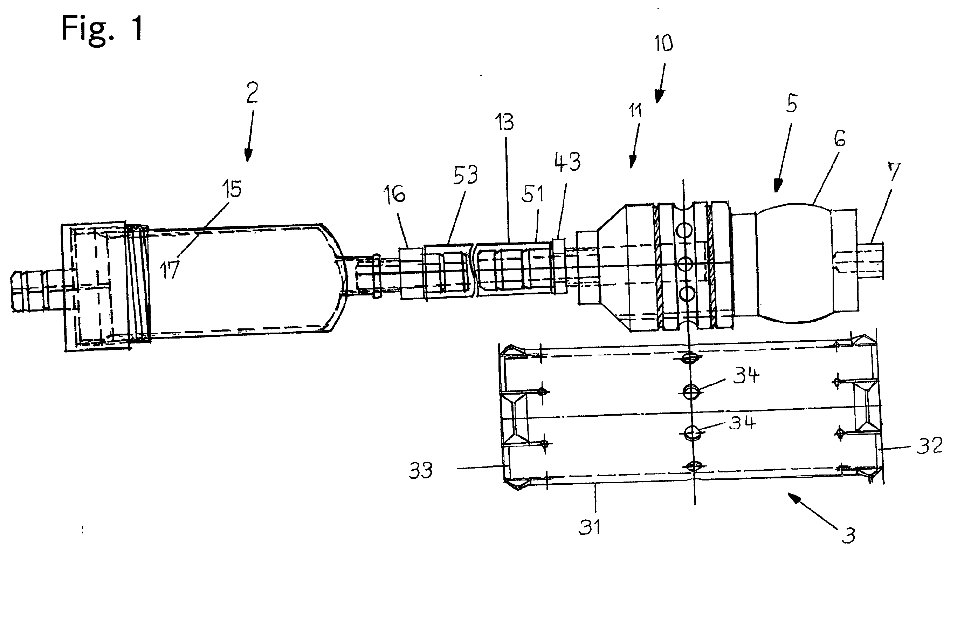

Fig. 1 zeigt die erfindungsgemäße Abdichtungs-Vorrichtung 1, die eine Bevorratungs-Einrichtung 2, eine Stützhülse 3, eine in diese einführbaren Blasebalg-Vorrichtung 5 mit einem Blasebalg 6, der am freien Ende eines Druckluftrohrs 7 (nur teilweise dargestellt) angebracht ist, eine Injektions-Vorrichtung 10 mit einem Injektionskolben 11 mit Injektions-Schlauch 13 umfaßt. Die Bevorratungs-Einrichtung 10 weist eine Kit-Tube 15 auf, die über den Injektions-Schlauch 13 am Injektionskolben 11 anschließbar ist.

Zur Befestigung der Kit-Tube 15 an dem Schlauch 13 weist diese einen entsprechenden Schlauchanschluß 16 auf. Die Kit-Tube 15 dient zur Aufnahme einer Kit-Kartusche 17 nach dem Stand der Technik. Als Kit wird vorzugsweise ein marktüblicher Flüssiggummi verwendet. An die Kit-Kartusche ist eine Beaufschlagungs-Vorrichtung, beispielsweise eine Druckluftpistole (nicht gezeigt) ansetzbar, mit der beispielsweise über eine Schlauchleitung (nicht gezeigt) die Kit-Kartusche 17 mit Druck beaufschlagt werden kann, um das Kit durch den Schlauch 13 in den Injektionskolben 11 zu drücken.

Die Stützhülse 3 weist einen hohlzylindrischen Grundkörper 31 auf, an dessen Enden jeweils ein unterteilter Stützring 32, 33 angeordnet ist. In der Mitte seiner Längserstreckung weist der hohlzylindrische Hohlkörper 31 Bohrungen 34 auf, die in regelmäßigen Abständen auf einer Umfangslinie in der Mitte des Grundkörpers 31 angeordnet sind.

Die Stützhülse 3 ist zum Einführen in zu verdichtenden Rohren mit Durchmessern zwischen 30 und 100 mm vorgesehen. Da die abzudichtenden Rohre meistens aus Metall, insbesondere aus Aluminium gebildet sind, und andererseits eine gewisse Elastizität der Stützhülse 3 vorteilhaft ist, ist die Stützhülse 3 vorzugsweise aus einem Kunststoff gebildet. Insbesondere ist hierbei ein Material wie Polytetrafluorethylen (PTFE) vorteilhaft. Die Außenseite 36 der Stützhülse muß zur Verteilung und stabilen Einlagerung des Dichtmittels oder der Dichtmasse geeignet sein. Zu diesem Zweck ist die Außenseite 36 bis in eine vorgegebene Tiefe mit einem geeigneten Ätzmittel vorgeätzt und dadurch aufgerauht. Die Stützhülse 3 wird vorzugsweise aus einem Vollmaterial gedreht. Sie weist eine Länge von 50 bis 400 mm auf, wobei die jeweils geeignete Länge abhängig von den jeweiligen Rohren oder Rohrstellen ist, an denen die abzudichtende Undichtigkeit auftritt. Meistens treten Undichtigkeiten an Verbindungsstellen von Rohren auf, so daß an diesen Stellen eine eher größere Länge der Stützhülse 3 vorteilhaft ist. Treten Undichtigkeiten beispielsweise an Schweißnähten auf, so können kürzere Längen für die Stützhülse 3, beispielsweise im Bereich von 50 mm gewählt werden. Die Länge der Stützhülse 3 hängt auch von dem Durchmesser des abzudichtenden Rohres ab. Je größer der Durchmesser des Rohres ist, um so größer ist die Länge der Stützhülse 3 vorzusehen.

Die Bohrungen 34 sind in der Stützhülse 3 vorgesehen, um den Kit oder die Dichtmasse mittels des Injektionskolbens 11 vom Innern der Stützhülse 3 durch die Bohrungen 34 hindurch in den Bereich zwischen der Außenseite 36 der Stützhülse 3 und der Innenwandung des abzudichtenden Rohres zu drücken. Die Bohrungen 34 sind über die Längserstreckung der Stützhülse 3 gesehen mittig in dieser angeordnet. Auf diese Weise gelangt die Dichtmasse durch die Bohrungen 34 zu weitgehend gleichen Zeitpunkten zu den Enden bzw. den Stützringen 32, 33 der Stützhülse 3. Die Bohrungen 34 sind auf einer Reihe angeordnet, so daß ein gleichmäßiges Durchpressen der Dichtmasse durch die Bohrungen 34 über den Umfang der Stützhülse 3 erfolgt. Dadurch werden Lufteinschlüsse im Bereich zwischen der Außenseite 36 und der Innenwandung des abzudichtenden Rohres vermieden. Die Anzahl der Bohrungen 34 hängen vom verwendeten Durchmesser des abzudichtenden Rohres ab. Bei einem Rohrdurchmesser von 30 mm sind jedoch mindestens acht Bohrungen 34 vorzusehen, um die Gefahr von Lufteinschlüssen zu vermeiden. Die Bohrungsdurchmesser liegen in einem Rohrdurchmesser von 30 mm bei ungefähr 4 mm. Die Größe des Bohrungsdurchmessers hängt von der Gestaltung des Injektionskolbens 11 und insbesondere desssen Injektionsbohrungen 12 ab. Die Größe der Durchmesser der Injektionsbohrungen 12 wiederum hängen vom Durchmesser des Injektionsschlauchs 13 ab. Erfahrungsgemäß liegt der Durchmesser des Injektionsschlauchs 13 im Bereich zwischen 10 mm und 15 mm, wobei ein Durchmesser von 10 mm für ein abzudichtendes Rohr mit ungefähr 30 mm Durchmesser verwendet wird. Jeder unterteilte Stützring 32, 33 weist an den Abschnittsgrenzen ihrer Unterteilungen oder Abschnitten 37a, 37b sich in Längsrichtung 31a des Grundkörpers 31 erstreckende, längliche Ausnehmungen 37c auf, die an den Enden des Grundkörpers 31 jeweils offen sind und im Innern des Grundkörpers 31 in jeweils eine Bohrung 37d übergeht, deren Durchmesser vorzugsweise um etwa dessen Hälfte größer ist als die Dicke jeder Ausnehmung 37c. Die Größe des Durchmessers der Bohrung 37d kann jedoch auch anders vorgesehen sein. Entlang des Umfangs des Grundkörpers 31 gesehen wechseln zwei verschiedenartig gestaltete Abschnitte 37a, 37b einander ab. Ein Abschnitt, der an dessen freiem Ende eine Erhebung 37e aufweist wechselt sich mit einem Abschnitt ab, dessen Außenkontur in radialer Richtung des Grundkörpers 31 gesehen sich nicht von dessen Außenseite 36 erhebt und der eine Anschrägung 37f aufweisen kann. Die in bezug auf den Grundkörper 31 radiale Erstreckung der Erhebungen 37e, die vorzugsweise rampenförmig gebildet sind, sind so gewählt, daß sie an den Innenwänden des jeweils abzudichtenden Rohres anliegen. Die Gestaltung der Stützringe 32, 33 mit den Ausnehmungen 37c und den Erhebungen 37e haben den Effekt einer Federwirkung beim Durchziehen der Stützhülse 3 durch Unebenheiten an den Innenwänden des abzudichtenden Rohres, beispielweise bei Schweißnähten oder Rohrverbindungsstellen. Es sind mindestens vier Abschnitte oder Stützsegmente 37a mit Erhebungen 37e je Stützring 32, 33 vorzusehen. Die obere Grenze der Anzahl von Stützsegmenten 37a ergibt sich im wesentlichen aus dem Innendurchmesser des abzudichtenden Rohres. Die Längserstreckung der Ausnehmungen 37c kann angepaßt werden auf die Größe der Unebenheiten im Rohrinneren, um eine ausreichende Federwirkung zu erzielen bei gleichzeitiger Anlage der äußeren Stellen der Stützsegmente 37a am Rohrinnern in dessen ebenen Bereichen.

Der Blasebalg 6 der Blasebalg-Vorrichtung 5 ist so gestaltet, daß der Blasebalg 5 in einer ausgewählten Stelle innerhalb der Stützhülse 3 festliegt, wenn der Blasebalg 6 aufgepumpt ist. Um den Blasebalg 6 aufzupumpen, ist eine Beaufschlagungs-Vorrichtung vorgesehen. Diese kann auch die Druckluftpistole 21 sein. Die Druckluft wird dem Blasebalg 6 durch das Druckluftrohr 7 zugeführt. Außerhalb des abzudichtenden Rohres wird der Blasebalg 6 in eine ausgewählte Position innerhalb der Stützhülse 3 gebracht und dann mittels der Beaufschlagungs-Vorrichtung aufgepumpt. Der Blasebalg 6 dient dann als Anschlag für den Injektionskolben 11, wenn die Stützhülse 3 von einer Seite in die abzudichtende Rohrleitung eingeführt wird und der Injektionskolben von der entgegengesetzten Seite der Rohrleitung durch diese und in die Stützhülse 3 geschoben wird. Das Druckluftrohr 7 kann auch als Druckluftschlauch ausgeführt sein, um die Stützhülse 3 auch durch gekrümmte Rohrstellen zu bewegen. Der Blasebalg 6 ist nach dem Stand der Technik gebildet und umfaßt einen Grundkörper vorzugsweise aus Metall, insbesondere aus Aluminium, um den herum eine aufblasbare Gummimanschette angeordnet ist. Die Länge des Druckluftrohres 7 ergibt sich aus der Länge der abzudichtenden Rohre. Zur Ausbesserung von Rohren innerhalb von Flugzeug-Tragflügeln ist eine Länge von mindestens 5 m angemessen. Die Beaufschlagungs-Vorrichtung kann auch mit einem Druckminderer versehen sein, da die Gummimanschette des Blasebalgs 6 üblicherweise einen Druck von 2,5 bis 3 bar beträgt und aus üblichen die Beaufschlagungs-Vorrichtung versorgenden Druckluft-Erzeugern Druckluft mit 6 bis 7 bar entnommen wird.

Der Injektionskolben 11 ist zylindrisch gebildet und weist ein erstes 41 und zweites Ende 42 auf. Der Injektionskolben 11 der Injektionsvorrichtung 10 wird in die Stützhülse 3 soweit eingeführt, bis sein erstes Ende mit der entsprechenden Endfläche des Blasebalgs 6, der gleichfalls in den Injektionskolben 11 zur Positionierung des Injektionskolbens 11 eingeführt ist, zur Anlage kommt. Am zweiten Ende 42 ist ein Schlauchanschluß zum Anschluß des Injektionsschlauchs 13 vorgesehen. Durch den Injektionsschlauch 13 wird die Dichtmasse in eine Innenbohrung oder Kammer 45 des zylindrischen Grundkörpers 40 gedrückt. Der Injektionskolben 11 dient als Verteilerkolben zur Verteilung der Dichtmasse, d.h. um die Dichtmasse aus der Kammer 45 durch Verteilerbohrungen 47 und von dort durch die Bohrungen 34 der Stützhülse 3 zu drücken. Die Anzahl der Verteilerbohrungen 47 ist gleich der Anzahl der Bohrungen 34 der Stützhülse 3. Die Verteilerbohrungen 47 sind über den Umfang des Injektionskolbens 11 gleichmäßig in Abständen verteilt, die so gewählt sind, daß die Verteilerbohrungen 47 in eine konzentrische Lage zu den Bohrungen 34 der Stützhülse 3 gebracht werden können. Die Verteilerbohrungen 47 stehen mit der Kammer 45 in Verbindung und sind im Bereich desjenigen Endes der Kammer 45 angeordnet, das dem ersten Ende 41 nahegelegen ist. Im Bereich der Verteilerbohrungen 47 ist eine in Umfangsrichtung des Injektionskolbens 11 verlaufende erste Nut 48 vorgesehen, so daß das äußere, d.h. der Stützhülse 3 nahegelegene Ende der Verteilerbohrungen 47 radial gesehen tiefer liegt als die Außenseite des zylindrischen Grundkörpers 40. Zwischen der Nut 48 und dem ersten Ende 41 ist eine parallel zur Nut 48 verlaufende erste Dichtnut 49a und auf der dazu entgegengesetzten Seite der Nut 48 eine ebenfalls parallel zur Nut 48 verlaufende zweite Dichtnut 49b angeordnet. Die erste 49a und zweite 49b Dichtnut sind zur Aufnahme eines Dichtrings vorgesehen, um zu verhindern, daß die durch die Verteilerbohrungen 47 austretende Dichtmasse über einen vorgegebenen Bereich um die Nut 48 herum unkontrolliert austritt. Die Nut 48 bewirkt, daß die durch die Verteilerbohrungen 47 austretende Dichtmasse gleichmäßig über den Umfang der Nut 48 verteilt ist, während diese durch die Bohrungen 34 der Stützhülse 3 hindurchtritt. Dies ist insbesondere wichtig, wenn beim Eindrücken der Dichtmasse die Verteilerbohrungen 47 nicht konzentrisch zu den Bohrungen 34 der Stützhülse 3 liegen.

Die Länge des Injektionsschlauchs 13 hängt davon ab, wie weit die abzudichtende Stelle des Rohres und somit die zur Abdichtung in Stellung gebrachte Stützhülse 3 von dem entsprechenden offenen Ende des abzudichtenden Rohres entfernt ist. Die Kit-Tube 15 dient zur Aufnahme einer Kit-Kartusche 17, die nach dem Stand der Technik gebildet ist und im gefüllten Zustand die Dichtmasse enthält. An der Kit-Kartusche 17 ist die Schlauchleitung 22 anbringbar, an dessen freiem Ende die Bevorratungs-Einrichtung, z.B. die Druck-luftpistole 21 angeschlossen werden kann, um den Druck zu erzeugen, mit dem die Dichtmasse aus der Kit-Kartusche 17 in den Injektionsschlauch 13, den Injektionskolben 11 und den Außenbereich der Stützhülse 3 gedrückt wird.

Die Blasebalg-Vorrichtung 5 ist in funktionaler Hinsicht allgemein eine Positions-Einrichtung und kann auch z.B. rein mechanisch, z.B. mittels einer Anschlagstelle in der Stützhülse 3 ausgeführt sein.

Im folgenden wird die Funktionsweise der erfindungsgemäßen Abdichtungs-Vorrichtung beschrieben:

Zunächst wird das abzudichtende Rohr mittels eines Endoskops nach dem Stand der Technik untersucht und die Leckage-Stelle identifiziert. Das abzudichtende Rohr ist an zwei Stellen beispielsweise durch Entfernen entsprechender Anschlußstücke zu öffnen, um von zwei Seiten an die Leckage-Stelle zu gelangen. Von einer der beiden Seiten wird das Druckluftrohr 7 ohne die Blasebalg-Vorrichtung 5 eingeführt und durch den gesamten offengelegten Rohrabschnitt hindurchgeführt, bis das freie Ende des Druckluftrohrs 7 an dem anderen Ende des Rohrabschnitts austritt. Anschließend wird die Blasebalg-Vorrichtung 5 am freien Ende des Druckluftrohrs 7 befestigt.

Zur Fixierung des Injektionskolbens 11 an der in das Rohr einzuführenden Stützhülse 3 wird der Injektionskolben 11 in die Stützhülse 3 bis zu einer Position eingeführt, bei der die Verteilerbohrungen 47 in der gleichen Längsstellung in der Stützhülse 3 gelegen sind, in der sich die Bohrungen 34 befinden. Vorzugsweise wird der Injektionskolben 11 in der Stützhülse 3 soweit gedreht, daß die Verteilerbohrungen 47 konzentrisch zu entsprechenden Bohrungen 34 liegen. Von der entsprechenden Seite her wird anschließend der Blasebalg 6 bzw. die Blasebalg-Vorrichtung 5 in die Stützhülse 3 eingeschoben, bis dessen entsprechendes Ende mit dem ersten Ende 41 des Injektionskolbens 11 zur Anlage kommt. Daraufhin wird der Blasebalg 6 mittels der Druckbeaufschlagungs-Vorrichtung über das Druckluftrohr 6 mit Druckluft beaufschlagt, um den Blasebalg 5 in der Stützhülse 3 zu fixieren. Der Injektionskolben 11 kann nun der Stützhülse 3 wieder entnommen werden.

Die Stützhülse 3 wird mittels des Druckluftrohrs 7 und des an der Innenwand der Stützhülse 3 angepressten Blasebalgs 6 in die entgegengesetzt liegende Öffnung des Rohrabschnitts hineingezogen und bis zu der Leckage-Stelle bewegt. Die Stützhülse 3 wird aufgrund der mittels des Endoskops erfolgten Vermessung des Rohrabschnitts in der Leckage-Stelle in dem Rohrabschnitt in eine Stellung gebracht, in der die Bohrungen 34 der Stützhülse 3 im Bereich der Leckage-Stelle liegen. Die Leckage-Stelle liegt dann vorzugsweise klargesehen mittig zwischen den unterteilten Stützringen 32, 33.

Auf den Injektionskolben 11 wird die Kit-Tube 15, die Kit-Kartusche 17 aufgesetzt und die Schlauchleitung 22 an die Kit-Kartusche 17 angeschlossen. Am freien Ende der Schlauchleitung 22 wird die Druckbeaufschlagungs-Vorrichtung bzw. die Druckluftpistole angeschlossen. Wenn sich der Injektionskolben 11 noch nicht in der beschriebenen Stellung in der Stützhülse 3 befindet, wird der Injektionskolben 11 mittels des Injektionsschlauchs 13 von dem entsprechenden Ende des Rohrabschnitts her in den Rohrabschnitt und in die Stützhülse 3 bis zur Anschlagstelle geführt.

Durch Betätigung der Druckluftpistole 21 wird zunächst der Injektionskolben 11 mit dem Kit oder der Dichtmasse vollgefüllt. Das heißt, es wird nur eine solche Menge aus der Kit-Kartusche 17 in den Injektionskolben 11 gedrückt, bis an den Bohrungen 34 der Stützhülse 3 die Dichtmasse auszutreten beginnt. Der Grund dafür ist, daß insbesondere bei der Verwendung von kleineren Kit-Kartuschen durch diese Vorgehensweise sichergestellt ist, daß genug Kit-Masse oder Dichtungsmasse für das Abdichten zur Verfügung steht. Bei Verwendung größerer Kit-Kartuschen 17 kann der Vorgang des Vorfüllens entfallen. Bei Durchführung des Vorfüllungs-Schritts ist vor dem eigentlichen Füll- oder Dichtvorgang die Kit-Kartusche 17 zu wechseln.

Beim eigentlichen Dichtvorgang wird die Dichtmasse oder Kit-Masse durch Betätigung der Druckluftpistole 21 von der Kit-Kartusche 17 durch den Injektionskolben 11 und durch die Bohrungen 34 der Stützhülse 3 gepresst. Durch das Vorhandensein der Nut 48 an dem Injektionskolben 11 sowie durch die am Umfang des Injektionskolbens 11 gleichmäßig verteilten Verteilerbohrungen 47 sowie die über den Umfang der Stützhülse 3 gleichmäßig verteilten Bohrungen 34 sammelt sich die Dichtmasse zunächst gleichmäßig über den Umfang der Stützhülse 3 im Bereich der Bohrungen 34. Bei andauernder Ausübung vom Druck auf die Kit-Kartusche 17 wandert die Dichtmasse aus dem Bereich der Bohrungen 34 in beiden entgegengesetzten Längsrichtungen zu den Stützringen 32, 33. Auf diese Weise wird vermieden, daß sich Lufteinschlüsse bilden können. Die Dauer des Einpressvorgangs ist abhängig von der Temperatur, den Eigenschaften der Dichtmasse. Während des Einpressvorgangs wird dieser mittels einer Kamera überprüft. Mit der endoskopischen Kamera wird festgestellt, zu welchem Zeitpunkt die Dichtmasse an den Enden der Stützhülse 3 ansteht.

Alternativ könnte auch der Einpressvorgang über eine vorbestimmte Zeit, die mittels Versuchen ermittelt worden ist, ausgeführt werden, ohne eine endoskopische Kamera zu verwenden. Es ist zu vermeiden, daß zu viel Kit eingepreßt wird, wodurch das Rohr verschlossen werden könnte. Auch zu wenig Kit wäre von Nachteil, da es keine ausreichende Abdichtung gewährleistet.

Das Druckluftrohr 7 wird dann von außen festgehalten, der Injektionskolben 11 mit dem Injektionsschlauch 13 aus dem Rohr herausgezogen. Am Druckluftrohr 7 kann abgelassen werden, so daß der Blasebalg 6 in sich zusammenfällt. Dieser wird mit dem Druckluftrohr 7 aus dem Rohr herausgeschoben und von diesem abgeschraubt.

Übliche Dichtmassen müssen ungefähr 72 Stunden bei einem Temperaturbereich zwischen 20 und 30° C aushärten. Dannach ist das Rohr wieder betriebsbereit.

## Patentansprüche

1. Vorrichtung zur Abdichtung einer Leckage-Stelle auf der Innenseite von Rohren mit einer Positionier-Einrichtung (5), mit einer Bevorratungs-Einrichtung (2) und mit einer Injektions-Vorrichtung (10) zur Aufbringung einer Dichtmasse auf die Leckage-Stelle,
**dadurch gekennzeichnet, daß**
die Vorrichtung eine zylindrische Stützhülse (3) mit zumindest zwei über den Umfang verteilten Bohrungen (34) und zwei Stützringen (32, 33) an ihren axialen Enden umfaßt,
die Injektions-Vorrichtung (10) einen in die Stützhülse (3) einführbaren Injektionskolben (11) umfaßt, der über den Umfang angeordnete Bohrungen (47) aufweist, die beidseits mittels Dichtungen (49a, 49b) gegenüber der Innenwand der Stützhülse (3) abgedichtet sind, und der mittels einer Positionier-Einrichtung (5) in der Stützhülse (3) positionierbar ist, um die Dichtmasse aus der Bevorratungs-Einrichtung (2) über den Injektionskolben (11) und Bohrungen (34) in den Bereich zwischen der Stützhülse (3) und dem abzudichtenden Rohr zu drücken.

2. Abdichtungs-Vorrichtung (1) nach dem Anspruch 1, **dadurch gekennzeichnet, daß** die Bohrungen (34) der Stützhülse (3) axial mittig und über den Umfang gleichmäßig verteilt angeordnet sind.

3. Abdichtungs-Vorrichtung (1) nach einem der voranstehenden Ansprüche, **dadurch gekennzeichnet, daß** die Stützhülse (3) mindestens acht Bohrungen (34) aufweist.

4. Abdichtungs-Vorrichtung (1) nach einem der voranstehenden Ansprüche, **dadurch gekennzeichnet, daß** die Stützringe (32, 33) der Stützhülse (3) Stützsegmente (37a) aufweisen, um eine Federwirkung der Stützhülse (3) gegen die Innenwand des abzudichtenden Rohres vorzusehen.

5. Abdichtungs-Vorrichtung (1) nach einem der voranstehenden Ansprüche, **dadurch gekennzeichnet, daß** die Positionier-Einrichtung (5) eine Blasebalg-Vorrichtung (5) mit einem Blasebalg (6) ist, der mittels einer Druckbeaufschlagungs-Vorrichtung soweit aufblasbar ist, um diesen an einer vorbestimmten Position innerhalb der Stützhülse (3) zu positionieren und als Anschlag für die Injektions-Vorrichtung zu dienen.

6. Abdichtungs-Vorrichtung (1) nach einem der voranstehenden Ansprüche, **dadurch gekennzeichnet, daß** der Injektionskolben (11) in seinem Inneren eine Kammer (45) aufweist, die einerseits mit einem an der Bevorratungs-Einrichtung (2) angeschlossenen Injektionsschlauch (13) und andererseits mit den Verteiler-Bohrungen (47) in Verbindung steht.

7. Verfahren zur Abdichtung eines Rohres von dessen Innenseite aus mit folgenden Schritten:
- Öffnen des Rohres an zwei Stellen in einer Weise, daß die Leckage-Stelle von zwei Seiten zugänglich ist und Durchschieben einer Blasebalg-Vorrichtung (5) von einer ersten Rohrseite an der Leckage-Stelle vorbei,
- Positionsieren der Blasebalg-Vorrichtung (5) in einer Stützhülse (3) mit Bohrungen (34), so daß eine darin eingeführte Injektions-Vorrichtung (10) mit über den Umfang angeordneten Verteiler-Bohrungen (47) beim Anliegen an der Blasebalg-Vorrichtung (5) derart in der Stützhülse (3) gelegen ist, daß die axiale Position der Bohrungen (34) und der Verteiler-Bohrungen (47) übereinstimmt,
- Einführen der Stützhülse (3) ohne der Injektions-Vorrichtung (10) mittels der Blasebalg-Vorrichtung (5) in das Rohr von dessen zweiter Seite bis zur Leckage-Stelle, so daß die Leckage-Stelle zwischen zwei an den axialen Enden der Stützhülse (3) vorgesehenen Stützringen (32, 33) gelegen ist,
- Einführen des Injektionskolbens (11) in die Stützhülse (3) bis sie in Anlage mit der Blasebalg-Vorrichtung (5) kommt, so daß die Verteiler-Bohrungen (47) mit den Bohrungen (34) in Verbindung stehen, und Anschluß einer Kit-Tube (15) über einen Injektionsschlauch (13) an den Injektionskolben (11),
- Bedrücken der Kit-Kartusche (17) und Einpressen der Dichtmasse durch den Injektionskolben (11), die Verteiler-Bohrungen (47) und die Bohrungen (34) in den Bereich zwischen der Stützhülse (3) und dem Rohr bis die Dichtmasse zu den axialen Enden der Stützhülse (3) gelangt ist,
- Entfernen des Injektionskolbens (11) aus der Stützhülse (3), um die Dichtmasse zwischen der Stützhülse (3) und den Innenwänden des abzudichtenden Rohres aushärten zu lassen.

## Claims

1. Device for sealing a leak on the inner side of pipes, with a positioning device (5), with a storing device (2) and with an injection device (10) for applying a sealing compound to the leak,
**characterized in that**
the device comprises a cylindrical supporting sleeve (3) with at least two bores (34), distributed over the circumference, and two supporting rings (32, 33) at its axial ends,
the injection device (10) comprises an injection ram (11), which can be introduced into the supporting sleeve (3), has bores (47) arranged over the circumference and sealed on both sides with respect to the inner wall of the supporting sleeve (3) by means of seals (49a, 49b), and can be positioned in the supporting sleeve (3) by means of a positioning device (5) in order to force the sealing compound out of the storing device (2) by way of the injection ram (11) and bores (34) into the region between the supporting sleeve (3) and the pipe to be sealed.

2. Sealing device (1) according to Claim 1, **characterized in that** the bores (34) of the supporting sleeve (3) are arranged such that they are axially central and distributed uniformly over the circumference.

3. Sealing device (1) according to one of the preceding claims, **characterized in that** the supporting sleeve (3) has at least eight bores (34).

4. Sealing device (1) according to one of the preceding claims, **characterized in that** the supporting rings (32, 33) of the supporting sleeve (3) have supporting segments (37a) in order to provide a spring action of the supporting sleeve (3) against the inner wall of the pipe to be sealed.

5. Sealing device (1) according to one of the preceding claims, **characterized in that** the positioning device (5) is a bellows device (5) with a bellows (6), which can be inflated by means of a pressure-applying device to the extent that it can be positioned at a predetermined position within the supporting sleeve (3) and can serve as a stop for the injection device.

6. Sealing device (1) according to one of the preceding claims, **characterized in that** the injection ram (11) has in its interior a chamber (45), which is in communication on the one hand with an injection hose (13) connected to the storing device (2) and on the other hand with the distributing bores (47).

7. Method for sealing a pipe from its inner side with the following steps:
- opening the pipe at two points in such a way that the leak is accessible from two sides and pushing a bellows device (5) through from a first side of the pipe past the leak,
- positioning the bellows device (5) in a supporting sleeve (3) with bores (34), so that, when the bellows device (5) is in place, an injection device (10) introduced into it, with distributing bores (47) arranged over the circumference, is located in the supporting sleeve (3) in such a way that the axial position of the bores (34) and the axial position of the distributing bores (47) coincide,
- introducing the supporting sleeve (3) without the injection device (10) by means of the bellows device (5) into the pipe from its second side up to the leak, so that the leak is located between two supporting rings (32, 33) provided at the axial ends of the supporting sleeve (3),
- introducing the injection ram (11) into the supporting sleeve (3) until it comes into contact with the bellows device (5), so that the distributing bores (47) are in communication with the bores (34), and connection of a kit tube (15) to the injection ram (11) by way of an injection hose (13),
- pressing the kit cartridge (17) and forcing the sealing compound through the injection ram (11), the distributing bores (47) and the bores (34) into the region between the supporting sleeve (3) and the pipe until the sealing compound has reached the axial ends of the supporting sleeve (3),
- removing the injection ram (11) from the supporting sleeve (3), in order to allow curing of the sealing compound between the supporting sleeve (3) and the inner walls of the pipe to be sealed.

## Revendications

1. Dispositif pour étanchéifier une zone de fuite du côté intérieur de tubes comprenant un dispositif de positionnement (5), un dispositif de stockage (2) et un dispositif d'injection (10) pour appliquer une masse d'étanchéité sur la zone de fuite,
**caractérisé en ce que**
le dispositif comprend une douille de support cylindrique (3) comprenant au moins deux alésages (34) répartis sur la périphérie et deux bagues de support (32, 33) à ses extrémités axiales,
le dispositif d'injection (10) comprend un piston d'injection (11) pouvant être inséré dans la douille de support (3), lequel piston présente des alésages (47) répartis sur la périphérie, qui sont étanchéifiés des deux côtés au moyen de joints d'étanchéité (49a, 49b) par rapport à la paroi intérieure de la douille de support (3), et peut être positionné dans la douille de support (3) au moyen d'un dispositif de positionnement (5), afin de presser la masse d'étanchéité hors du dispositif de stockage (2) par le biais du piston d'injection (11) et des alésages (34) dans la zone entre la douille de support (3) et le tube à étanchéifier.

2. Dispositif d'étanchéité (1) selon la revendication 1, **caractérisé en ce que** les alésages (34) de la douille de support (3) sont répartis axialement au centre et uniformément sur la périphérie.

3. Dispositif d'étanchéité (1) selon l'une quelconque des revendications précédentes, **caractérisé en ce que** la douille de support (3) présente au moins huit alésages (34).

4. Dispositif d'étanchéité (1) selon l'une quelconque des revendications précédentes, **caractérisé en ce que** les bagues de support (32, 33) de la douille de support (3) présentent des segments de support (37a) afin de prévoir un effet de ressort de la douille de support (3) contre la paroi intérieure du tube à étanchéifier.

5. Dispositif d'étanchéité (1) selon l'une quelconque des revendications précédentes, **caractérisé en ce que** le dispositif de positionnement (5) est un dispositif à soufflet gonflable (5) avec un soufflet gonflable (6) qui peut être gonflé au moyen d'un dispositif de sollicitation en pression afin de positionner celui-ci dans la douille de support (3) en une position prédéterminée et de servir de butée pour le dispositif d'injection.

6. Dispositif d'étanchéité (1) selon l'une quelconque des revendications précédentes, **caractérisé en ce que** le piston d'injection (11) présente en son intérieur une chambre (45) qui est en liaison d'une part avec un tuyau d'injection (13) raccordé au dispositif de stockage (2) et d'autre part avec les alésages de distribution (47).

7. Procédé pour étanchéifier un tube depuis son côté intérieur, comprenant les étapes suivantes :
- ouverture du tube en deux endroits de manière à ce que la zone de fuite soit accessible depuis deux côtés et enfoncement d'un dispositif de soufflet gonflable (5) depuis un premier côté du tube jusque devant la zone de fuite,
- positionnement du dispositif de soufflet gonflable (5) dans une douille de support (3) avec des alésages (34), de sorte qu'un dispositif d'injection (10) introduit à l'intérieur avec des alésages de distribution (47) disposés sur la périphérie soit placé dans la douille de support (3) lors de l'application contre le dispositif de soufflet gonflable (5) de telle sorte que la position axiale des alésages (34) et des alésages de distribution (47) coïncide,
- introduction de la douille de support (3) sans le dispositif d'injection (10) au moyen du dispositif de soufflet gonflable (5) dans le tube depuis son deuxième côté jusqu'à la zone de fuite, de sorte que la zone de fuite soit placée entre deux bagues de support (32, 33) prévues aux extrémités axiales de la douille de support (3),
- introduction du piston d'injection (11) dans la douille de support (3) jusqu'à ce qu'elle parvienne en appui avec le dispositif de soufflet gonflable (5), de sorte que les alésages de distribution (47) soient en liaison avec les alésages (34), et raccordement d'un tube kit (15) par le biais d'un tuyau d'injection (13) au piston d'injection (11),
- enfoncement de la cartouche du kit (17) et pressage de la masse d'étanchéité à travers le piston d'injection (11), les alésages de distribution (47) et les alésages (34) dans la région entre la douille de support (3) et le tube jusqu'à ce que la masse d'étanchéité parvienne aux extrémités axiales de la douille de support (3),
- enlèvement du piston d'injection (11) hors de la douille de support (3) afin de laisser durcir la masse d'étanchéité entre la douille de support (3) et les parois intérieures du tube à étanchéifier.
